# EUROPEAN PATENT APPLICATION

(11) **EP 2 081 142 A1**
(43) Date of publication of application: **22.07.2009**
(21) Application number: 08015652.4
(22) Date of filing: 04.09.2008
(51) Int. Cl.: G06Q 30/00

(54) **System for printing purchase order sheet including target advertisement**

(30) Priority: 09.01.2008 KR 20080002386
(71) Applicant: Koreacenter.com Co., Ltd., Geumcheon-gu Seoul (KR)
(72) Inventor: An, Chae-jun, Bucheon-si Gyeonggi-do (KR)
(74) Representative: Grünecker, Kinkeldey, Stockmair & Schwanhäusser Anwaltssozietät

(57) **Abstract**

Provided is a system for printing a purchase order sheet including a target advertisement. The system includes a franchise terminal which extracts a property value from purchaser information, requests an advertisement server to send a target advertisement corresponding to the extracted property value and receives the target advertisement, and includes the received target advertisement into a particular area of a purchase order sheet and prints the purchase order sheet. Accordingly, a purchase order sheet can be utilized as an advertising medium, and thus effective target marketing can be realized.

## Description

### CROSS REFERENCE TO RELATED APPLICATIONS

This application claims priority from Korean Patent Application No. 10-2008-0002386, filed on January 9, 2008, the disclosure of which is incorporated herein in its entirety by reference.

### TECHNICAL FIELD

The following description relates to a system for printing a purchase order sheet including a target advertisement, and more particularly, to a technology of printing a purchase order sheet to be enclosed with a product package which is to be delivered to a customer who has ordered the product online.

### BACKGROUND

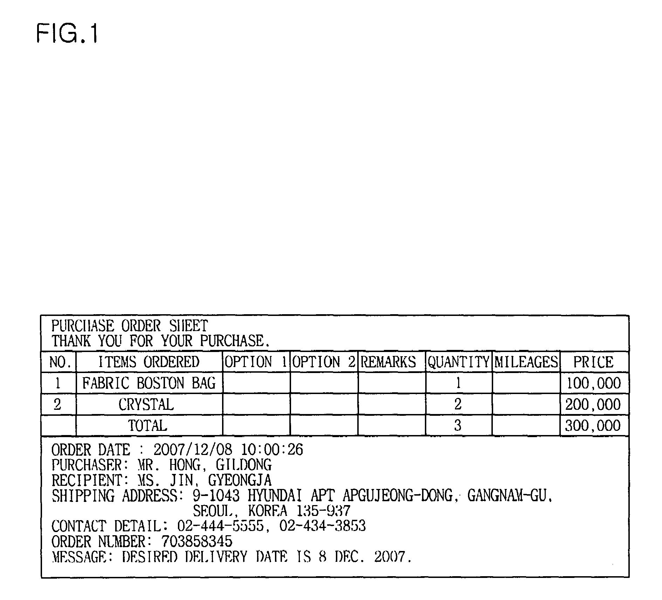

FIG. 1 shows an example of a conventional purchase order form which is enclosed with a product package to be delivered to a purchaser who has bought the product online.

When a purchaser orders a product at an online shopping mall, the online shopping mall operator delivers the product enclosing the purchase order sheet as shown in FIG. 1.

If any advertisement is included in a purchase order sheet enclosed with the product package to be delivered to the purchaser, the purchase order sheet can be utilized as an advertisement medium.

Thus, the present invention is based on such an idea to use a purchase order sheet as an advertising medium by printing the purchase order sheet with at least one advertisement included therein and delivering the printed purchase order sheet together with a product package to a customer.

### SUMMARY

Accordingly, in one aspect, there is provided a system for printing a purchase order sheet that includes a target advertisement selected based on information of a purchaser, who has made the order online, and is to be delivered together with a package to the purchaser.

According to another aspect, there is provided a system for printing a purchase order sheet including a target advertisement, the system including a franchise terminal which extracts a property value from purchaser information, requests an advertisement server to send a target advertisement corresponding to the extracted property value and receives the target advertisement, and includes the received target advertisement into a particular area of a purchase order sheet and prints the purchase order sheet.

According to still another aspect, there is provided a system for printing a purchase order sheet including a target advertisement, the system including an advertisement server which receives a request for a target advertisement corresponding a property value from at least one franchise terminal, searches database for a target advertisement corresponding the property value and extracts the found target advertisement, and transmits the extracted target advertisement to the franchise terminal.

Accordingly, a purchase order sheet is printed with a target advertisement selected based on purchaser information, and thus the purchase order sheet can be utilized as an advertising medium, and enables efficient target marketing to be achieved.

Other features will become apparent to those skilled in the art from the following detailed description, which, taken in conjunction with the attached drawings, discloses exemplary embodiments of the invention.

### BRIEF DESCRIPTION OF THE DRAWINGS

FIG. 1 shows an example of a conventional purchase order form which is enclosed with a product to be delivered to a purchaser who has bought the product online.
FIG. 2 shows a configuration of a system for printing a purchase order sheet including a target advertisement according to an exemplary embodiment.
FIG. 3 is a block diagram of the system for printing a purchase order sheet including a target advertisement according to an exemplary embodiment.
FIG. 4 shows an example of a user interface for set of a target advertisement and input of a target advertisement.
FIG. 5 shows an example of a purchase order sheet of an online shopping mall according to an exemplary embodiment.
FIG. 6 is a flowchart of a system for printing a purchase order sheet including a target advertisement according to an exemplary embodiment.

### DETAILED DESCRIPTION

The following detailed description is provided to assist the reader in gaining a comprehensive understanding of the methods, apparatuses and/or systems described herein. Accordingly, various changes, modifications, and equivalents of the systems, apparatuses and/or methods described herein will be suggested to those of ordinary skill in the art. Also, descriptions of well-known functions and constructions are omitted to increase clarity and conciseness.

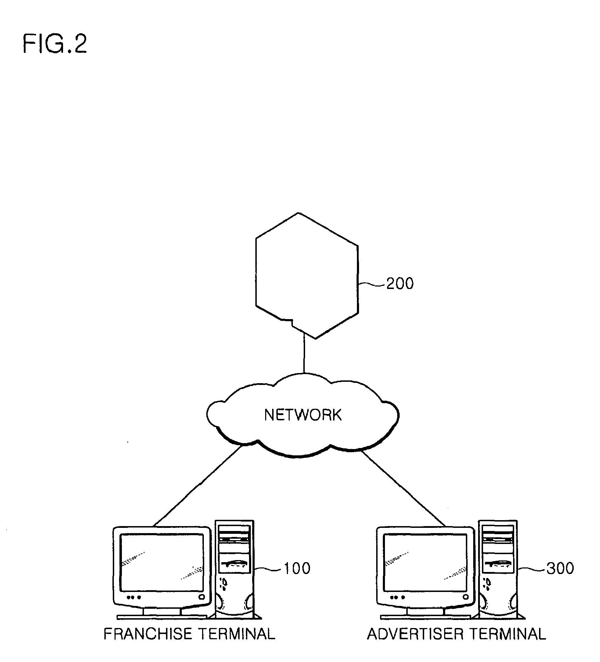

FIG. 2 shows a configuration of a system for printing a purchase order sheet including a target advertisement according to an exemplary embodiment. Referring to FIG. 2, the system includes an advertisement server 200, and a plurality of franchise terminals 100 and advertiser terminals 300 which are, respectively, connected to the advertisement server 200 via a network.

An advertiser registers a target advertisement to the advertisement server 200 through the advertiser terminal 300, and an online shopping mall operator requests the advertisement server 200 to send a target advertisement based on information of a purchaser through the franchise terminal 100. The online shopping mall operator prints a purchase order sheet including the target advertisement therein, and sends a product package with the printed purchase order sheet enclosed therewith to the purchaser. Thus, the purchase order sheet can be used as an advertising medium, thereby enabling to realize efficient target marketing.

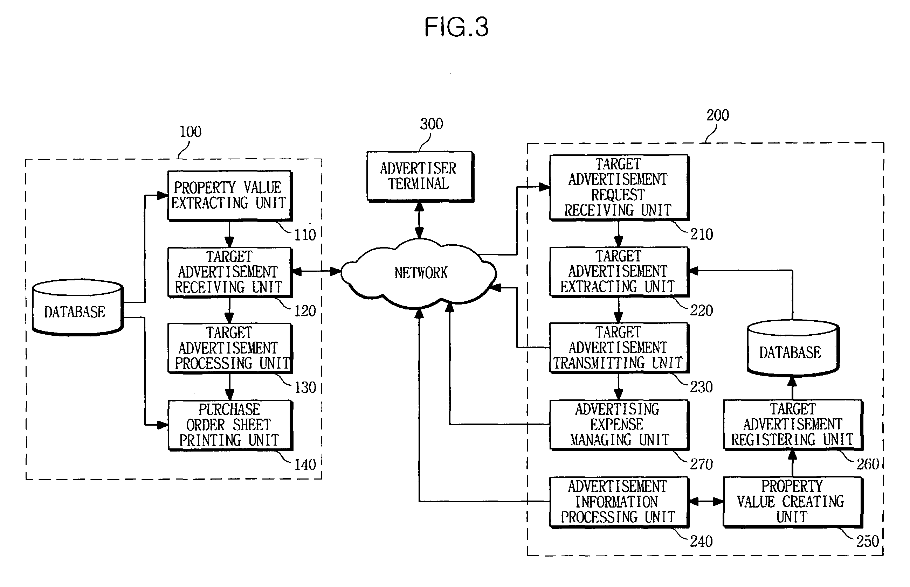

A detailed configuration of a system for printing a purchase order sheet including a target advertisement according to an exemplary embodiment will now be described with reference to FIG. 3. FIG. 3 is a block diagram of a system for printing a purchase order sheet including a target advertisement according to an exemplary embodiment.

As shown in FIG. 3, the system includes a franchise terminal 100 which includes a property value extracting unit 110, a target advertisement receiving unit 120, a target advertisement processing unit 130, and a purchase order sheet printing unit 140.

The property value extracting unit 110 extracts target advertisement properties from an order of a purchaser. For instance, the purchaser needs to sign up for a corresponding online shopping mall as a member through relevant procedures by use of a purchaser terminal (not shown) to use the online shopping mall web-site provided by a franchise terminal 100. Then member information that the purchaser input are stored in database.

The member information includes member identification information such as ID and a password and personal information, such as his/her name and age, a place to reside, and his/her interests. A member who has made an order at the online shopping mall is a purchaser and the corresponding member information becomes purchaser information.

The property value extracting unit 110 extracts property values for a target advertisement based on the age, sex, place to reside and interests of the purchaser, which are included in the purchaser information, such that the corresponding target advertisement can be printed with a purchase order sheet enclosed with a package to be delivered to the purchaser.

For example, details including age, sex, place to reside and interests of purchasers may be set to have different values for criteria to be evaluated, and the evaluated values for respective details are added up to be used as a property value for the target advertisement. Different values may be allocated to the different age periods, for example, the age of from 16 up to 20 years may be set to 1, and the age of from 20 up to 25 years may be set to 2.

Meanwhile, each sex also may have different value, for example, the male may be set to 1 and the female may be set to 2. In such a manner, the places to reside may be set to have different values according to the areas, for example, Seoul city may be set to 01, Busan city may be set to 02, and Jeju islets may be set to 99. Additionally, the purchasers' interests may be set to various values, for example, listening to music may be set to 01; watching movies may be set to 02, and so on. Then, the values of respective details based on the purchaser information are added up together to generate the sum of values, and this sum of values can be used as the property value of the target advertisement for the purchaser.

The target advertisement receiving unit 120 requests the advertisement server 200 to send a target advertisement corresponding to the property value extracted by the property value extracting unit 110. Once the property value for a target advertisement is extracted from the purchaser information by using the above-described method, the target advertisement receiving unit 120 sends the extracted property value and requests the target advertisement server 200 to send a target advertisement corresponding to the extracted property value.

Then, the advertisement server 200 compares the property value received from the franchise terminal 100 with property values of respective target advertisements stored in the database to search for the target advertisement of which the property value is matched with the received property value. Then, the advertisement server 200 sends the matched target advertisement to the franchise terminal 100 and then the franchise terminal 100 receives it through the target advertisement receiving unit 120.

At this time, if there are several target advertisements that correspond to the property value received from the franchise terminal 100, one of the found target advertisements may be selected arbitrarily or manually and be sent to the franchise terminal 100 such that the only one target advertisement is included in a purchase order sheet to be delivered to the purchaser together with a package, or alternatively all the found target advertisements are sent to the franchise terminal 100 such that all of them are included in the purchase order sheet.

The target advertisement processing unit 130 includes the target advertisement received by the target advertisement receiving unit 120 in a specific area of the purchase order sheet of the corresponding purchaser. That is, when the target advertisement receiving unit 120 has received the target advertisement corresponding to the extracted property value from the advertisement server 200, the target advertisement processing unit 130 generates a printing image by including the received target advertisement in a particular area of the purchase order sheet of the purchaser.

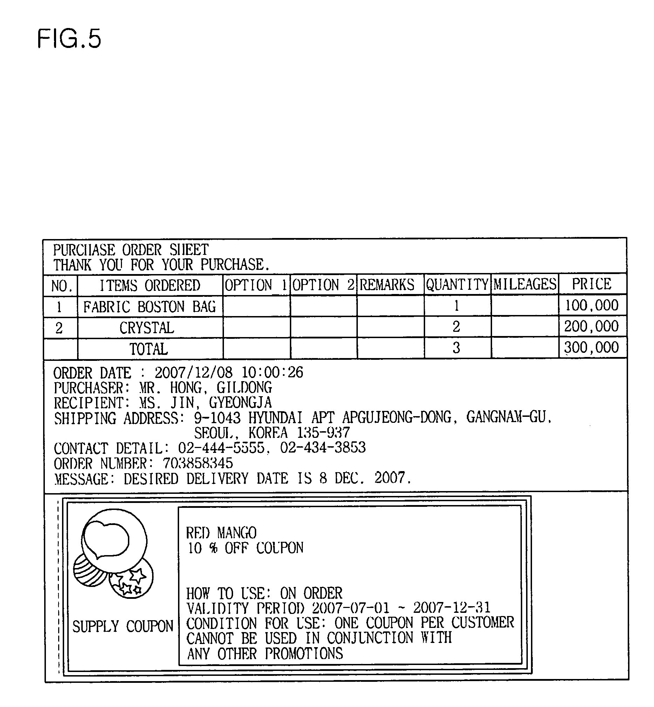

The purchase order sheet printing unit 140 prints the purchase order sheet including the target advertisement. Specifically, when the target advertisement processing unit 130 generates the printing image of a purchase order sheet with the target advertisement included therein as shown in FIG. 5, the purchase order sheet printing unit 140 prints the purchase order sheet using printing equipment such as a printer.

The online shopping mall operator encloses the printed purchase order sheet containing the target advertisement with a package and delivers the package to a recipient address. Accordingly, the purchase order sheet can be utilized as an advertising medium by including the target advertisement based on the purchaser information, and thus efficient target marketing can be realized.

As illustrated in drawings, the advertisement server 200 of the system for printing a purchase order sheet including the target advertisement includes a target advertisement request receiving unit 210, a target advertisement extracting unit 220, and a target advertisement transmitting unit 230.

The target advertisement request receiving unit 210 receives a request for a target advertisement corresponding to a property value from at least one franchise terminal 100. That is, the franchise terminal 100 requests the advertisement server 200 to send a target advertisement which corresponds to a property value extracted from purchaser information, and the target advertisement request receiving unit 210 receives the request.

The target advertisement extracting unit 220 searches the database for the target advertisement corresponding to the property value received by the target advertisement request receiving unit 210. In other words, when the target advertisement request receiving unit 210 receives the request for the target advertisement that corresponds to the property value from the franchise terminal 100, the target advertisement extracting unit 220 extracts the corresponding target advertisement by comparing the received property value with property values of respective target advertisements stored in the database.

If the target advertisement extracting unit 220 has found a plurality of target advertisements corresponding to the received property value, one of the found target advertisements may be selected arbitrarily or manually and be sent to the franchise terminal 100 such that the only one target advertisement is included in a purchase order sheet to be delivered to the purchaser together with a package, or alternatively all the found target advertisements are sent to the franchise terminal 100 such that they are included in the purchase order sheet.

The target advertisement transmitting unit 230 transmits the extracted target advertisement which corresponds to the property value to the franchise terminal 100. That is, the target advertisement extracting unit 220 extracts at least one target advertisement of which property value matches with the property value sent from the franchise terminal 100, the target advertisement transmitting unit 230 transmits the target advertisement to the franchise terminal 100, and the franchise terminal 100 which receives the target advertisement prints a purchase order sheet which has the target advertisement placed in its particular area.

The online shopping mall operator encloses the printed purchase order sheet including the target advertisement with a package and delivers this package to a recipient address. Accordingly, a printed purchase order sheet to be enclosed with a package can be utilized as an advertising medium by having a target advertisement therein, hence enabling efficient target marketing.

According to another exemplary embodiment, the advertisement server 200 of the system for printing a purchase order sheet including a target advertisement may further include an advertisement information processing unit 240, a property value creating unit 250, and a target advertisement registering unit 260.

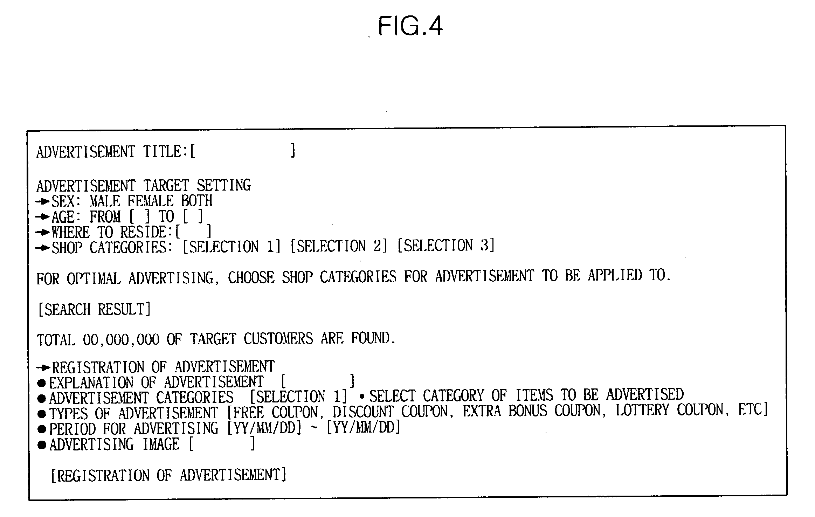

The advertisement information processing unit 240 provides a user interface for an advertiser to set an advertisement and input a target advertisement to the advertisement server 200 by use of the advertiser terminal. The user interface may be implemented, for example, as shown in FIG. 4.

Referring to FIG. 4, the user interface may include a section for a sex, age, an area, and interests (categories of shops) of a target purchaser, and a section for a target advertisement including explanation of the advertisement, an advertisement category, a duration for which an target advertisement lasts, an advertising image, and the like. An advertiser can set and input a target advertisement with ease and convenience using the user interface displayed on the advertiser terminal 300.

The property value creating unit 250 creates a property value for a target advertisement based on information for setting the target advertisement input by the advertisement information processing unit 240. For instance, if the information for setting the target advertisement includes the age, sex, place to reside and interests of a purchaser, each item is set to have different values for different criteria, and the values of the items are added up together to create the property value.

Different values may be allocated to the different age periods, for example, the age of from 16 up to 20 years may be set to 1, and the age of from 20 up to 25 years may be set to 2. Meanwhile, each sex also may have a different value, for example, the male may be set to 1 and the female may be set to 2. In such a manner, the places of residence may be set to have different values according to the areas, for example, Seoul city may be set to 01, Busan city may be set to 02, and Jeju islets may be set to 99. Additionally, the purchasers' interests may be set to various values, for example, listening to music may be set to 01; watching movies may be set to 02, and so on. Then, by adding the values of items together, a property value of a target advertisement is obtained based on the information input by the advertiser.

The target advertisement registering unit 260 matches the target advertisement input from the advertisement information processing unit 240 with the property value created by the property value creating unit 250, and stores the matched target advertisement in the database. In other words, the information for setting a target advertisement and the target advertisements are input to the target advertisement registering unit 204 so that the input target advertisements can be matched with the property values created based on the input information and the matched target advertisement is stored in the database. Accordingly, when there is a request for a target advertisement corresponding to a property value sent from the franchise terminal 100, the advertisement server 200 searches the database for the corresponding target advertisement and sends the found target advertisement to the franchise terminal 100.

According to an exemplary embodiment, the advertisement server 200 may further include an advertising expense managing unit 270. When a target advertisement is sent to the franchise terminal 100 through the target advertisement transmitting unit 230, the advertising expense managing unit 270 pays the advertising expense for the sent target advertisement to the corresponding franchise.

In this case, the advertising expense managing unit 270 may be implemented to deposit a certain amount of money as an advertising fee into a bank account of a franchisee. For example, the online shopping mall operator receives from an advertiser a given amount of money in its bank account, leaves some of the money as a commission, and forwards the rest of the money as an advertising fee to a bank account of the franchisee.

Through the procedures described above, the franchisees of the online shopping mall can be paid for the target advertisements by advertisers, the target advertisements being included in purchase order sheets to be delivered with packages to purchasers from respective franchisees.

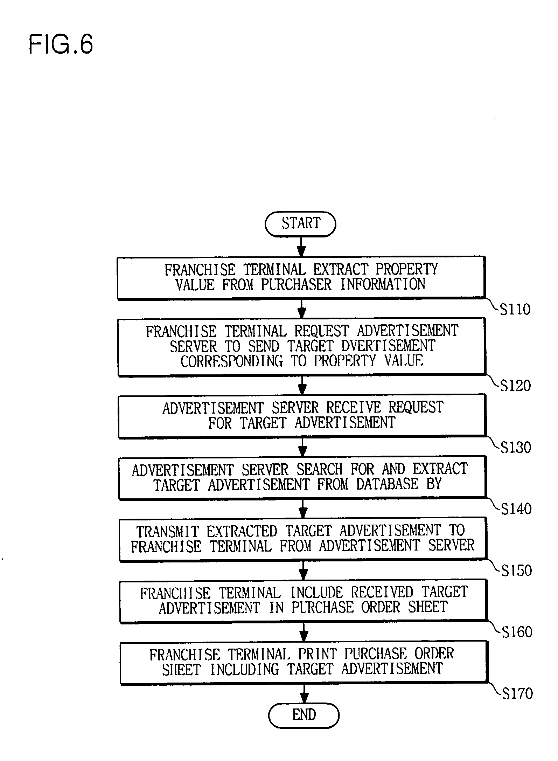

Operations of a system for printing a purchase order sheet including a target advertisement in accordance with an exemplary embodiment will now be described with reference to FIG. 6 in conjunction with FIG. 3. FIG. 6 is a flowchart of the system according to the exemplary embodiment.

In operation S110, a franchise terminal 100 extracts a property value for a target advertisement from purchaser information.

In operation S120, the franchise terminal 100 issues a request to an advertisement server for a target advertisement corresponding to the extracted property value.

In operation S130, the advertisement server 200 receives the request from the franchise terminal 100.

In operation S140, the advertisement server 200 searches database for a target advertisement of which property value corresponds to the property value sent from the franchise terminal 100, and extracts the searched target advertisement from the database.

Then, in operation S150, the advertisement server 200 sends the extracted target advertisement to the franchise terminal 100.

In operation S160, the franchise terminal 100 forms a purchase order sheet by including the received target advertisement in a specific area of the purchase order sheet.

In operation S170, the franchise terminal 100 prints the formed purchase order sheet.

According to the system for printing a purchase order sheet including a target advertisement in accordance with the exemplary embodiment, the printed purchase order sheet can be utilized as an advertising medium by having the target advertisement based on purchaser information, and thus efficient target marketing can be achieved. Also, such system is applicable to an order sheet printing technology and an advertising technology, or any application of these technologies.

A number of exemplary embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A system for printing a purchase order sheet including a target advertisement, the system comprising:
a franchise terminal which includes a property value extracting unit which extracts a property value for a target advertisement from purchaser information; a target advertisement receiving unit which requests an advertisement server to send a target advertisement corresponding to the extracted property value and receives the corresponding target advertisement from the advertisement server; a target advertisement processing unit which places the target advertisement received by the target advertisement receiving unit in a particular area of a purchase order sheet of a corresponding purchaser; and an order printing unit which prints the purchase order sheet including the target advertisement.

2. The system of claim 1, wherein the property value extracting unit extracts the property value based on the age, sex, place to reside and interests of a purchaser included in the purchaser information.

3. A system for printing a purchase order sheet including a target advertisement, the system comprising:
an advertisement server which includes a target advertisement request receiving unit which receives a request for a target advertisement corresponding to a property value from at least one franchise terminal; a target advertisement extracting unit which searches database for the requested target advertisement and extracts the found target advertisement from the database; and a target advertisement transmitting unit which transmits the extracted target advertisement to the franchise terminal.

4. The system of claim 3, wherein the advertisement server further includes an advertisement information processing unit which provides a user interface for an advertiser to set and input a target advertisement through an advertiser terminal to the advertisement processing unit; a property value creating unit which analyzes advertisement setting information input from the advertisement information processing unit and creates a property value for a target advertisement based on the analysis result; and a target advertisement registering unit which matches the property value created by the property value creating unit with the target advertisement input by the advertisement information processing unit and stores the matched target advertisement in database.

5. The system of claim 4, wherein the advertisement server further includes an advertising expense managing unit which manages a franchisee to be paid for an advertising fee when a target advertisement is transmitted to the corresponding franchise terminal from the target advertisement transmitting unit.

6. The system of claim 5, wherein the advertising expense managing unit pays a predetermined amount of money for the advertising fee to a bank account of the corresponding franchisee.

7. The system of claim 4, wherein the advertisement setting information input by the advertisement information processing unit includes the age, sex, a place to reside, and interests of a purchaser.

8. The system of one of claims 3 to 7, wherein when a plurality of target advertisements corresponding to the property value are found, the target advertisement extracting unit selects one of the target advertisements.
